# EUROPEAN PATENT APPLICATION

(11) **EP 4 756 243 A1**
(43) Date of publication of application: **10.06.2026**
(21) Application number: 24217129.6
(22) Date of filing: 03.12.2024
(51) Int. Cl.: F16C 3/02

(54) **DISTRIBUTION GEARING FOR A VEHICLE**

(71) Applicant: ZF Friedrichshafen AG, 88046 Friedrichshafen (DE)
(72) Inventor: Kota, Nagachetan, 500032 Hyderabad (IN); Papal, Sandeep, 500032 Hyderabad (IN)
(74) Representative: WBH Wachenhausen Patentanwälte PartG mbB

(57) **Abstract**

The present invention relates to a distribution gearing (10) for a vehicle (1). The distribution gearing comprises an input shaft (4), a first output shaft (5) for driving a first drive element (8) of the vehicle and a second output shaft (6) for driving a second drive element (9) of the vehicle. The distribution gearing is configured for distributing a power of the input shaft (4) between the first drive element (8) and the second drive element (9) via the output shafts (5, 6). The distribution gearing comprises a carbon member (14; 24) that includes carbon fiber. The carbon member (14; 24) is provided in a power flow from the input shaft (4) to one of the drive elements (8; 9). The present invention also relates to a vehicle and a method for assembling the distribution gearing.

## Description

### Technical field

The present disclosure refers to a distribution gearing for a vehicle, a vehicle with a distribution gearing and a method for assembling a distribution gearing.

### Prior art

Distribution gearings for vehicles are known. In some cases, the distribution gearing is configured for distributing power between driving elements of the vehicle. In such distribution gearings, the dimensions of the distribution gearing may be large due to geometric constraints. This may cause a significant weight increase of the distribution gearing under certain conditions.

### Summary of the invention

The present disclosure relates in a first aspect to a distribution gearing for a vehicle. Examples for the vehicle may include a car, a truck, a bus and a working vehicle. Examples for the working vehicle may include a tractor, a combine harvester, a communal vehicle like a street sweeping machine, an excavator, a grader and a loader. The distribution gearing comprises an input shaft. The input shaft may be configured for receiving power and for introducing power into the distribution gearing. The vehicle may comprise a driving unit for directly or indirectly driving the input shaft by applying torque. The driving unit may comprise an internal combustion engine and/or an electric motor. The driving unit may receive electric energy from an energy storage, for example a tank or a battery, and convert it to rotational mechanical energy, for example to a driving torque for the input shaft. The vehicle may comprise a shiftable transmission disposed in a power flow between the driving unit and the distribution gearing.

The distribution gearing comprises a first output shaft for driving a first drive element and a second output shaft for driving a second drive element. Each output shaft of the distribution gearing may be operatively connected to the respective drive element of the vehicle. If two elements are operatively connected, the elements are directly or indirectly coupled to each other so that a movement of one element causes a reaction of the other element. An operative connection can be established, for example, by frictional engagement or geometric fit. The operative connection can correspond to a meshing between corresponding gears of the two elements. Further elements, such as shafts, constant velocity joints and/or one or more gear sets, may be present between the elements. The first and/or second output shafts may be formed of a metallic material, such as aluminum, steel, titanium or an alloy comprising at least one of these materials. The drive element may be, for example, a wheel for contacting the ground or a drive wheel or sprocket for tracks.

The distribution gearing is configured for distributing a power of the input shaft between the first drive element and the second drive element via the output shafts. The distribution gearing may be configured for distributing power between the first output shaft and the second output shaft. The distribution gearing may comprise one or more gear sets configured for converting torques and rotational speeds from one value to another. The gear set or sets may be formed as spur gears, planetary gears, bevel gears or other suitable gears. The distribution gearing may comprise a rotating element. The rotating element may be an element of a gear set. For example, the distribution gearing may comprise a planetary gear set and the rotating element may be a sun gear, a planetary gear or a ring gear.

The distribution gearing comprises a carbon member. The carbon member includes carbon fiber. The carbon member may be formed from a composite material comprising a matrix material and carbon fibers as reinforcement. An example for such a composite material includes carbon fiber-reinforced polymers, in which carbon fibers are embedded in a polymer matrix, for example resin. Non-polymer materials may also be used as the matrix for the carbon fibers. An example for such a composite material includes a metal matrix composite material with carbon fibers dispersed in a metallic matrix, such as copper, aluminum, or steel.

The carbon member is provided in a power flow from the input shaft to one of the drive elements. The carbon member may be configured for transferring torque. The carbon member may form a part of a shaft. For example, the carbon member may form a part of the input shaft, the first output shaft and/or the second output shaft. The part of the shaft may extend substantially axially and/or substantially radially with respect to the shaft. For example, the carbon member may form a middle part of the respective shaft with respect to the axial direction. Alternatively or additionally, the carbon member may form a radially extending part of the respective shaft. The shaft partly formed by the carbon member may comprise end pieces on one or both ends of the carbon member. For example, the end pieces may be continuous with the carbon member. The end pieces may be formed as connecting pieces for connecting to other elements. The carbon member may be operatively connected to a drive element of the vehicle via an end piece. Alternatively or additionally, the carbon member may be operatively connected to a rotating element of the distribution gearing via an end piece. For example, one end piece may be arranged in the power flow from the rotating element to the carbon member and/or another end piece may be arranged in the power flow from the carbon member to the drive element.

The carbon member may be formed in a tubular shape extending substantially axially. Alternatively or additionally, the carbon member may be formed in a plate shape extending substantially radially. As one example, the carbon member may be formed as a hollow part of a shaft. For example, the above-described end pieces or one of the end pieces may be partially arranged within the hollow carbon member. As another example, the carbon member may be formed as a radially extending member for connecting a shaft to a rotating element of the distribution gearing. The carbon member may be integrally formed with the rotating element or operatively connected thereto, for example via an interface. The operative connection of the carbon member to the end pieces and/or to the rotating element of the distribution gearing may comprise a friction fit and/or a geometric fit. The distribution gearing may comprise one or more carbon members. For example, one carbon member may be provided to form a middle part of one output shaft and another carbon member may be provided independently to radially connect another output shaft to a rotating element of the distribution gearing.

According to the first aspect, at least one component of the distribution gearing is made of a material reinforced with carbon fiber. Such a material achieves a high stiffness at a low weight. Therefore, for a given strength requirement, it is possible to reduce the overall weight of the distribution gearing compared to a case, in which conventional materials, for example metals, are used. This effect is maximized when the carbon member is provided as part of a component having a significantly larger dimension or load in one direction compared to the other directions. Examples for such components include elongated shafts and radially extending connecting components as described above. By means of the carbon member, such components can be optimized for maximizing stiffness in a load direction while minimizing weight. For example, according to studies carried out by the present applicants for a use case in which one of the output shafts, namely a longer one of the output shafts, is provided with the carbon member, the total mass of the output shaft could be reduced by 45% while at the same time increasing torsional stiffness by 30%. Therefore, the present disclosure in its first aspect enables the provision of a distribution gearing combining high torsional stiffness with low weight.

In an embodiment, the carbon member is coupled to a first connecting member. The first connecting member forms a first part of one of the output shafts. The first connecting member comprises a first coupling portion for operatively coupling to the one of the drive elements. The first connecting member may provide an interface for connecting different parts of the one output shaft, for example in a detachable or permanent manner. Such a configuration can provide different sections or pieces of the shaft with locally different properties. The carbon member forming a first part of the one output shaft may be configured for transferring torque over an extended length of the one output shaft. Thus, the carbon member may serve as a middle piece of the one output shaft. The first connecting member may be configured for receiving torque from the carbon member and transferring it to the first coupling portion. The first coupling portion may include elements for operatively coupling to the one of the drive elements. Examples for such elements for operative coupling include elements for friction fit and/or elements for a geometric fit. As one example, the first coupling portion may comprise a spline as an interface. In such an example, a counterpart to the first coupling portion on the side of the drive element may comprise a complementary spline for receiving the spline of the first coupling portion and its torque. Thus, the first connecting member may serve as an end piece of the one output shaft for allowing torque transfer from the one output shaft to the one drive element. The first connecting member may be made of a different material than the carbon member. For example, the first connecting member may be made of a metallic material. In such an example, the first connecting member may be easily machinable for forming the first coupling portion, while the carbon member may be optimized independently for low weight without regard to machinability. Hence, the present embodiment provides a two-piece output shaft, in which separate pieces of the one output shaft can be optimized with regard to their different requirements.

In an embodiment, the carbon member is coupled to a second connecting member. The second connecting member comprises a second coupling portion for operatively coupling to a rotating element of the distribution gearing. The explanations and technical effects described above with respect to the first connecting member and the first coupling portion can be applied to the second connecting member and the second coupling portion accordingly. It is noted that the terms "first" and "second" are merely used for differentiating between the connecting members and their features, each of which is optional. Accordingly, the presence of a second connecting member, a second coupling portion etc. does not require the presence of a first connecting member, a first coupling portion etc.. The rotating element of the distribution gearing of the present embodiment may be configured as described above. In one configuration, the rotating element may be a planetary carrier of a planetary gear set of the distribution gearing. The second connecting member may be configured for transferring torque from the planetary carrier to the carbon member. In another configuration, the rotating element may be a ring gear of a planetary gear set of the distribution gearing. The ring gear may have a different diameter than the one output shaft, for example a larger diameter. The second connecting member may serve as an intermediate member for bridging a distance, for example a radial distance, from the ring gear to the one output shaft. Accordingly, the second connecting member may extend substantially in a radial direction of the one output shaft. In both of the before-mentioned configurations, the second connecting member may be configured for transferring torque from the rotating element of the distribution gearing to the one output shaft with a high stiffness and low weight.

In an embodiment, the second connecting member forms a second part of the one of the output shafts. The second connecting member may serve as an end piece of the one output shaft for allowing torque transfer from the rotating element to the one output shaft. For example, the first connecting member may form an end piece at one axial end of the carbon member and the second connecting member may form an end piece at the other axial end of the carbon member. The explanations concerning the end piece formed by the first connecting member are applicable to the second connecting member, with the one drive element being replaced by the rotating element accordingly. In the present embodiment, a three-piece output shaft can be provided with a simple configuration.

In an embodiment, the coupling portion or one of the coupling portions is formed as a spline. This provides a high torque transfer capacity with a simple configuration. The spline may be provided with a loose fit. Thereby, relative axial displacement between the coupled elements can be compensated. Alternatively, the spline may be provided with an interference fit. Thereby, torque transfer capacity can be further improved.

In an embodiment, the coupling between the carbon member and the first connecting member and/or the coupling between the carbon member and the second connecting member is provided by press fitting. The press fit may be provided as an alternative to the spline described above or in addition thereto. Press fitting provides a simple and lightweight coupling between the carbon member and the respective connecting member. Furthermore, press fitting allows a simple and reliable connection between different materials, for example between a carbon member and a metallic connecting member.

In an embodiment, the distribution gearing comprises an adhesive applied in a region of the press fit. The region of the press fit may relate to a section, for example an axial section, of the carbon member where the press fit is provided. For example, the region of the press fit may be an overlapping region of the carbon member and the respective connecting member. The adhesive in the region of the press fit improves bonding strength between the carbon member and the respective connecting member. Thereby, torque transfer and reliability are improved.

In an embodiment, the distribution gearing comprises a tape for sealing an opening formed in the carbon member for applying the adhesive. The carbon member may be provided with an opening for applying, for example injecting, the adhesive. The tape may be formed as a thin film. The tape may be wrapped around the carbon member for covering the opening. Alternatively or additionally, the tape may comprise an additional adhesive for adhering to the carbon member. The tape provides a simple structure for sealing an opening and preventing leakage of the adhesive. Thereby, reliability is improved.

In an embodiment, the coupling between the carbon member and the first connecting member and/or the coupling between the carbon member and the second connecting member is provided as a spline. This can be provided in addition to the above-described press fit or as an alternative thereto. The above-described technical effects of using a spline as an interface apply accordingly. Thus, the configuration of the present embodiment provides a simple and reliable structure for transferring torque between the carbon member and the respective connecting member.

In an embodiment, the distribution gearing comprises a first planetary gear set and a second planetary gear set. The first planetary gear set comprises at least a first element, a second element and a third element. The second planetary gear set comprises at least a first element, a second element and a third element. The input shaft is non-rotatably connected to the first element of the first planetary gear set. The second element of the first planetary gear set is non-rotatably connected to the first output shaft. The third element of the first planetary gear set is non-rotatably connected to the first element of the second planetary gear set. The second element of the second planetary gear set is connected to the housing. The third element of the second planetary gear set is non-rotatably connected to the second output shaft.

A non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. For example, the first element may be a sun gear, the second element may be a planetary gear and the third element may be a ring gear. The respective planetary gear set may be a plus or a minus planetary gear set.

The above-described rotating element operatively coupled to the carbon member may be formed by an element of the first planetary gear set and/or an element of the second planetary gear set. For example, in one configuration of the carbon member, the rotating element may be a second element of the first planetary gear set. In such a configuration, the carbon member may be provided in a power flow between the second element of the first planetary gear set and the first drive element. For example, in another configuration of the carbon member, the further rotating element may be a third element of the second planetary gear set. In such a configuration, the carbon member may be provided in a power flow between the third element of the second planetary gear set and the second drive element. The two configurations described above are applicable independently of each other and may be provided in combination, such that either one or both of the first output shaft and the second output shaft may be provided with a respective carbon member.

In a second aspect, the present disclosure relates to a vehicle. The vehicle comprises a distribution gearing according to the first aspect. The respective advantages and further features can be taken from the description of the first aspect, wherein embodiments of the first aspect also form embodiments of the second aspect and vice versa.

In a third aspect, the present disclosure relates to a method for assembling a distribution gearing. The method comprises providing a carbon member, a first connecting member and a second connecting member. The carbon member and the first and second connecting members may be provided in accordance with the first aspect with the respective advantages and further features. The method may comprise forming an opening in the carbon member for applying an adhesive in a region where press fit is to be provided. Additional openings may be provided in the same region of the press fit or another region of the press fit. The method may comprise press fitting the first connecting member to the carbon member and press fitting the second connecting member to the carbon member. The order of forming the opening or openings, press fitting the first connecting member and press fitting the second connecting member may be varied as desired. For example, the opening may be formed in a region where press fitting is expected before any press fitting is performed, and the first and second connecting members may be press fitted in this order. As another example, the first and second connecting members may be press fitted simultaneously and/or the opening may be formed after the press fitting. The method may comprise injecting the adhesive via the opening. The method may comprise applying a tape to seal the opening in the carbon member.

### Brief description of drawings

Figure 1 shows a vehicle with a distribution gearing according to an embodiment.
Figure 2 schematically shows a general layout of the distribution gearing of the vehicle of Figure 1.
Figure 3 schematically shows a cross section of a distribution gearing according to an embodiment.
Figure 4 schematically shows a carbon member, a first connecting member and a second connecting member of the distribution gearing of Figure 3 prior to being assembled.
Figure 5 shows a method for assembling the components shown in Figure 4.

### Detailed description of embodiments

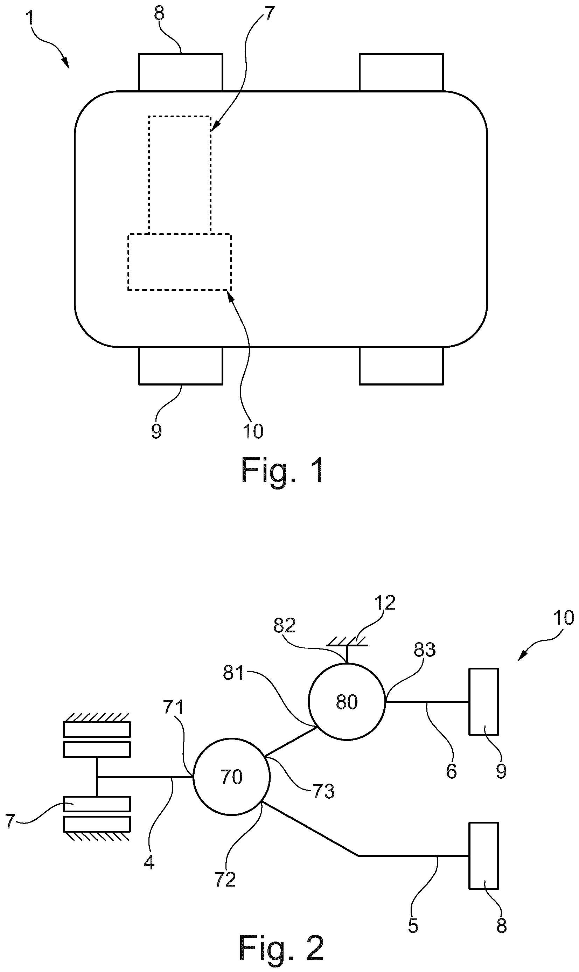

Figure 1 shows a vehicle 1 with a distribution gearing 10 according to an embodiment of the present disclosure. The distribution gearing 10 is driven by a driving unit 7 and is configured for distributing power input by the driving unit 7 to at least two drive elements 8, 9. In the present embodiment, the driving unit 7 is an electrical motor, and the drive elements 8, 9 are wheels of the vehicle 1. Specifically, a first drive element 8 corresponds to a left wheel of the vehicle 1, and a second drive element 9 corresponds to a right wheel of the vehicle 1.

Figure 2 schematically shows a general layout of the distribution gearing 10 according to an embodiment of the present disclosure. The distribution gearing 10 is formed as a distribution gearing with two planetary gear sets. As can be seen from Figure 2, the distribution gearing 10 comprises a first planetary gear set 70 having a first element 71, a second element 72 and a third element 73. Furthermore, the distribution gearing 10 comprises a second planetary gear set 80 having a first element 81, a second element 82 and a third element 83. A torque of the driving unit 7 can be introduced into the distribution gearing 10 via the first element 71 of the first planetary gear set 70. For this purpose, an input shaft 4 driven by the driving unit 7 is operatively connected to the first element 71 of the planetary gear set 70, here permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member, here a housing 12. A first output shaft 5 is operatively connected to the second element 72 of the first planetary gear set 70, in this case permanently non-rotatably connected. The first output shaft 5 is operatively connected to the first drive element 8. A second output shaft 6 is operatively connected to the third element 83 of the second planetary gear set 80, in this case permanently non-rotatably connected. The second output shaft 6 is operatively connected to the second drive element 9.

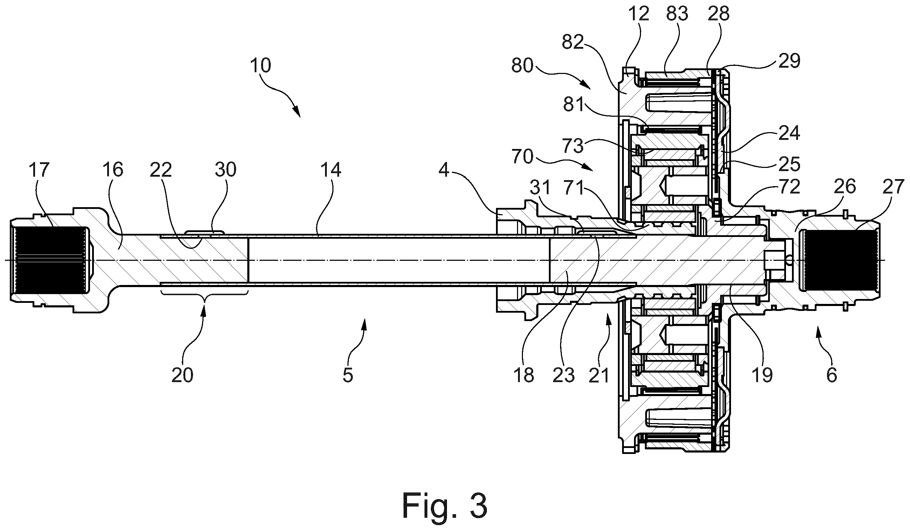

Figure 3 schematically shows a cross section of a distribution gearing 10 according to an embodiment of the present disclosure. The distribution gearing 10 of the embodiment of Figure 3 is provided with two planetary gear sets 70, 80 in accordance with the general layout of Figure 2. In the embodiment of Figure 3, with respect to the first planetary gear set 70, the first element 71 is a sun gear, the second element 72 is a planetary carrier and the third element 73 is a ring gear. With respect to the second planetary gear set 80, the first element 81 is a sun gear, the second element 82 is a planetary carrier and the third element 83 is a ring gear. In the present embodiment, the distribution gearing 10 comprises two carbon members 14, 24 as follows.

The first carbon member 14 forms a part of the first output shaft 5. The first output shaft 5 is presently formed as an elongated three-piece shaft. With respect to an axial direction, the first carbon member 14 forms a middle part of the first output shaft 5. The first carbon member 14 is formed as an axially extending tubular member, specifically as a hollow shaft piece. On one axial end of the first carbon member 14, namely on the left side of Figure 3, the first output shaft 5 comprises a first connecting member 16 of the first carbon member 14. The first connecting member 16 comprises on one axial side, namely the left side of Figure 3, a first coupling portion 17 presently formed as an internal spline for non-rotatably coupling to the first drive element 8. On the other axial side of the first connecting member 16, namely the right side of Figure 3, the first connecting member 16 overlaps with the first carbon member 14 so as to extend therethrough. An outer diameter of the overlapping portion of the first connecting member 16 is slightly larger in a disassembled state than an inner diameter of the first carbon member 14 in the overlapping region. Thus, a press fit is provided for transferring torque, and the overlapped portion of the first carbon member 14 corresponds to a region 20 of the press fit. In this region 20 of the press fit, press fitting is performed during insertion of the first connecting member 16 into the first carbon member 14. Furthermore, an opening 22 for applying an adhesive (not shown) to the region 20 of the press fit is formed in the first carbon member 14 at an axial middle of the region 20 of the press fit. The opening 22 is presently covered by a tape 30 adhered to the first carbon member 14.

On the other axial end of the first carbon member 14, namely on the right side of Figure 3, the first output shaft 5 comprises a second connecting member 18 of the first carbon member 14. The second connecting member 18 comprises on one axial side, namely the right side of Figure 3, a second coupling portion 19 presently formed as an external spline for non-rotatably coupling to the planetary carrier 72 of the first planetary gear set 70. On the other axial side of the second connecting member 18, namely the left side of Figure 3, the second connecting member 18 overlaps with the first carbon member 14 so as to extend therethrough. An outer diameter of the overlapping portion of the second connecting member 18 is slightly larger in a disassembled state than an inner diameter of the first carbon member 14 in the overlapping region. Thus, a press fit is provided for transferring torque, and the overlapped portion of the first carbon member 14 corresponds to a region 21 of the press fit. In this region 21 of the press fit, press fitting is performed during insertion of the second connecting member 18 into the first carbon member 14. An opening 23 for applying an adhesive (not shown) to the region 21 of the press fit is formed in the first carbon member 14 at an axial middle of the region 21 of the press fit. The opening 23 is presently covered by a tape 31 adhered to the first carbon member 14.

The second carbon member 24 connects the second output shaft 6 to the ring gear 83 of the second planetary gear set 80. In the present embodiment, the second output shaft 6 is a short shaft formed by a first connecting member 26 of the second carbon member 24. The first connecting member 26 comprises on one axial side, namely the right side of Figure 3, a first coupling portion 27 presently formed as an internal spline for non-rotatably coupling to the second drive element 9. On the other axial side of the first connecting member 26, namely the left side of Figure 3, the first connecting member 26 is provided with an interface 25 for coupling to the second carbon member 24. The interface 25 is presently formed as a spline on an outer diameter of the first connecting member 26. The second carbon member 24 is formed as a plate shaped member extending radially from the first connecting member 26, specifically the interface 25, to an inner diameter of a second connecting member 28 of the second carbon member 24. At the inner diameter of the second connecting member 28, a second coupling portion 29 is provided for coupling the second connecting member 28 to the second carbon member 24. The second coupling portion 29 is presently formed as a spline. The second connecting member 28 is presently formed integrally with the ring gear 83 of the second planetary gear set 80.

In the present embodiment, the first carbon member 14 serves to provide a three-piece first output shaft 5 non-rotatably connected to the first planetary gear set 70. Furthermore, the second carbon member 24 independently serves to non-rotatably connect the second output shaft 6 to the second planetary gear set 80. Thus, the carbon members 14, 24 of the present embodiment enable the transfer of torque with high stiffness and low weight. In another embodiment, only the first carbon member 14 is provided. In another embodiment, only the second carbon member 24 is provided. In another embodiment, the second output shaft 6 is formed as a three-piece output shaft with a carbon member serving as a middle piece in the same manner as the three-piece first output shaft 5.

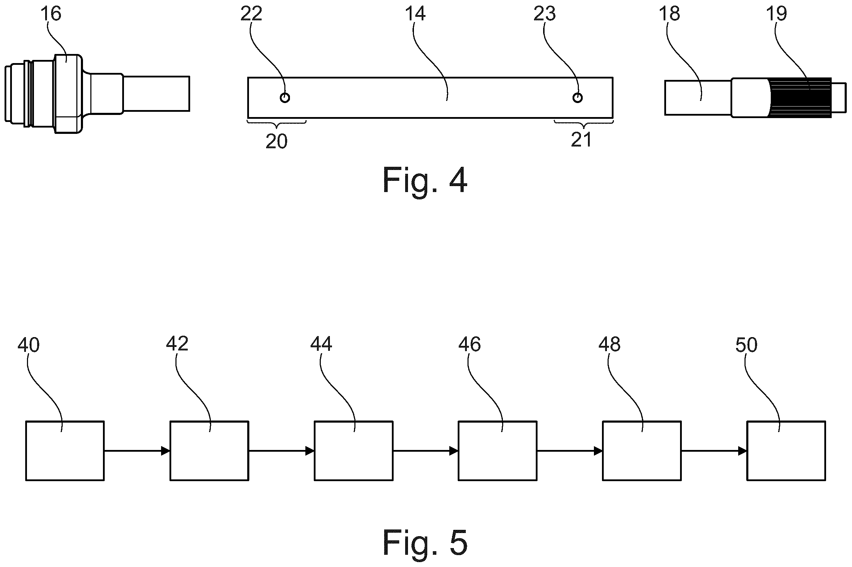

Figure 4 schematically shows the first output shaft 5 of the distribution gearing 10 of Figure 3 prior to being assembled. Figure 5 shows a method for assembling the distribution gearing 10, specifically the first output shaft 5 shown in Figures 3 and 4.

In an assembly step 40, the first carbon member 14 as well as the first connecting member 16 and the second connecting member 18 of the first carbon member 14 are provided as shown in Figure 4. In an assembly step 42, openings 22, 23 are formed in the first carbon member 14. The openings 22, 23 are formed in the regions 20, 21, where the press fit is to be provided as described above, for applying an adhesive to the press fit. In an assembly step 44, the first connecting member 16 is press fitted to the first carbon member 14. In an assembly step 46, the second connecting member 18 is press fitted to the first carbon member 14. In an assembly step 48, the adhesive is injected via the openings 22, 23. In an assembly step 50, tapes 30, 31 are applied so as to seal the openings 22, 23.

In the method of the embodiment according to Figure 5, the assembly steps 40, 42, 44, 46, 48, 50 are carried out sequentially in the order described above. However, the present disclosure is not limited to this order; furthermore, at least some assembly steps may be omitted. In another method embodiment, the assembly steps 44, 46 of press fitting the connecting members 16, 18 are carried out simultaneously. In another method embodiment, the assembly step 42 of forming the openings 22, 23 is carried out after the assembly steps 44, 46 of press fitting. In another method embodiment, the assembly step 48 of injecting the adhesive is replaced by an assembly step of applying the adhesive to the region 20, 21 of the press fit before any press fitting is performed. In another method embodiment, the assembly step 50 of applying tapes 30, 31 is omitted, and the adhesive is cured in the openings 22, 23 instead. In another method embodiment, the assembly steps 42, 48 and 50 of providing openings 22, 23, injecting the adhesive and applying tapes 30, 31 are omitted.

### Reference signs

- 1: vehicle
- 4: input shaft
- 5, 6: output shaft
- 7: driving unit
- 8, 9: drive element
- 10: distribution gearing
- 12: stationary member
- 14, 24: carbon member
- 25: interface
- 16, 26: first connecting member
- 17, 27: first coupling portion
- 18, 28: second connecting member
- 19, 29: second coupling portion
- 20, 21: region of the press fit
- 22, 23: opening
- 30, 31: tape
- 40, 42, 44, 46, 48, 50: assembly steps
- 70, 80: planetary gear set
- 71, 81: first element
- 72, 82: second element
- 73, 83: third element

## Claims

1. A distribution gearing (10) for a vehicle (1) comprising an input shaft (4), a first output shaft (5) for driving a first drive element (8) of the vehicle (1) and a second output shaft (6) for driving a second drive element (9) of the vehicle (1), wherein the distribution gearing (10) is configured for distributing a power of the input shaft (4) between the first drive element (8) and the second drive element (9) via the output shafts (5, 6), and wherein the distribution gearing (10) comprises a carbon member (14; 24) that includes carbon fiber and is provided in a power flow from the input shaft (4) to one of the drive elements (8; 9).

2. The distribution gearing (10) according to claim 1, **characterized in that** the carbon member (14; 24) is coupled to a first connecting member (16; 26) which forms a first part of one of the output shafts (5; 6) and comprises a first coupling portion (17; 27) for operatively coupling to the one of the drive elements (8; 9).

3. The distribution gearing (10) according to claim 1 or 2, **characterized in that** the carbon member (14; 24) is coupled to a second connecting member (18; 28) which comprises a second coupling portion (19; 29) for operatively coupling to a rotating element (72; 83) of the distribution gearing (10).

4. The distribution gearing (10) according to claim 3, **characterized in that** the second connecting member (18) forms a second part of the one of the output shafts (5).

5. The distribution gearing (10) according to any one of claims 2 to 4, **characterized in that** one of the coupling portions (17; 27; 19; 29) is formed as a spline.

6. The distribution gearing (10) according to any one of claims 2 to 5, **characterized in that** the coupling between the carbon member (14) and the first connecting member (16) and/or the coupling between the carbon member (14) and the second connecting member (18) is provided by press fitting.

7. The distribution gearing (10) according to claim 6, **characterized in that** the distribution gearing (10) comprises an adhesive applied in a region (20; 21) of the press fit.

8. The distribution gearing (10) according to claim 7, **characterized in that** the distribution gearing (10) comprises a tape (30; 31) for sealing an opening (22; 23) formed in the carbon member (14) for applying the adhesive.

9. The distribution gearing (10) according to any one of claims 2 to 8, **characterized in that** the coupling between the carbon member (24) and the first connecting member (26) and/or the coupling between the carbon member (24) and the second connecting member (28) is provided as a spline.

10. The distribution gearing (10) according to any one of the preceding claims, **characterized by** comprising a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (83) is non-rotatably connected to a stationary member (12), and the third element (23) of the second planetary gear set (80) is non-rotatably connected to the second output shaft (6).

11. Vehicle (1) comprising a distribution gearing (10) according to any one of the preceding claims.

12. Method for assembling a distribution gearing (10) according to any one of claims 1 to 10, **characterized by** comprising:
- providing (40) a carbon member (14), a first connecting member (16) and a second connecting member (18),
- press fitting (44) the first connecting member (16) to the carbon member (14), and
- press fitting (46) the second connecting member (18) to the carbon member (14).

13. Method according to claim 12, **characterized by** comprising
- forming (42) an opening (22; 23) in the carbon member (14) for applying an adhesive in a region (20; 21) where press fit is to be provided, and
- injecting (48) the adhesive via the opening (22; 23).

14. Method according to claim 13, **characterized by** comprising
- applying (50) a tape (30; 31) to seal the opening (22; 23) in the carbon member (14).

## Amended claims

### Amended claims in accordance with Rule 137(2) EPC.

1. A distribution gearing (10) for a vehicle (1) comprising an input shaft (4), a first output shaft (5) for driving a first drive element (8) of the vehicle (1) and a second output shaft (6) for driving a second drive element (9) of the vehicle (1), wherein the distribution gearing (10) is configured for distributing a power of the input shaft (4) between the first drive element (8) and the second drive element (9) via the output shafts (5, 6), and wherein the distribution gearing (10) comprises a carbon member (14; 24) that includes carbon fiber and is provided in a power flow from the input shaft (4) to one of the drive elements (8; 9), wherein the carbon member (14; 24) is coupled to a first connecting member (16; 26) which forms a first part of one of the output shafts (5; 6) and comprises a first coupling portion (17; 27) for non-rotatably connecting to the one of the drive elements (8; 9), and wherein the carbon member (14; 24) is coupled to a second connecting member (18; 28) which comprises a second coupling portion (19; 29) for non-rotatably connecting to a rotating element (72; 83) of the distribution gearing (10).

2. The distribution gearing (10) according to claim 1, **characterized in that** the second connecting member (18) forms a second part of the one of the output shafts (5).

3. The distribution gearing (10) according to claim 1 or 2, **characterized in that** one of the coupling portions (17; 27; 19; 29) is formed as a spline.

4. The distribution gearing (10) according to any one of the preceding claims, **characterized in that** the coupling between the carbon member (14) and the first connecting member (16) and/or the coupling between the carbon member (14) and the second connecting member (18) is provided by press fitting.

5. The distribution gearing (10) according to claim 4, **characterized in that** the distribution gearing (10) comprises an adhesive applied in a region (20; 21) of the press fit.

6. The distribution gearing (10) according to claim 5, **characterized in that** the distribution gearing (10) comprises a tape (30; 31) for sealing an opening (22; 23) formed in the carbon member (14) for applying the adhesive.

7. The distribution gearing (10) according to any one of the preceding claims, **characterized in that** the coupling between the carbon member (24) and the first connecting member (26) and/or the coupling between the carbon member (24) and the second connecting member (28) is provided as a spline.

8. The distribution gearing (10) according to any one of the preceding claims, **characterized by** comprising a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (83) is non-rotatably connected to a stationary member (12), and the third element (23) of the second planetary gear set (80) is non-rotatably connected to the second output shaft (6).

9. Vehicle (1) comprising a distribution gearing (10) according to any one of the preceding claims.

10. Method for assembling a distribution gearing (10) according to any one of claims 1 to 8, **characterized by** comprising:
- providing (40) a carbon member (14), a first connecting member (16) and a second connecting member (18),
- press fitting (44) the first connecting member (16) to the carbon member (14), and
- press fitting (46) the second connecting member (18) to the carbon member (14).

11. Method according to claim 10, **characterized by** comprising
- forming (42) an opening (22; 23) in the carbon member (14) for applying an adhesive in a region (20; 21) where press fit is to be provided, and
- injecting (48) the adhesive via the opening (22; 23).

12. Method according to claim 11, **characterized by** comprising
- applying (50) a tape (30; 31) to seal the opening (22; 23) in the carbon member (14).
